# EUROPÄISCHE PATENTSCHRIFT

(11) **EP 1 509 377 B1**
(45) Veröffentlichungstag und Bekanntmachung des Hinweises auf die Patenterteilung: **02.06.2010**
(21) Anmeldenummer: 03725057.8
(22) Anmeldetag: 17.04.2003
(51) Int. Cl.: B29C 37/00, B30B 15/00

(54) **VERFAHREN UND VORRICHTUNG ZUR HERSTELLUNG VON BREMS- ODER KUPPLUNGSBEL GEN AUS BINDEMITTELGEBUNDENEN PRESSMASSEN**
METHOD AND DEVICE FOR THE PRODUCTION OF BRAKE LININGS OR CLUTCH LININGS MADE OF PRESSING MATERIALS THAT ARE BONDED BY MEANS OF A BONDING AGENT
PROCEDE ET DISPOSITIF POUR FABRIQUER DES GARNITURES DE FREIN OU D'EMBRAYAGE EN MATIERES PRESSEES LIEES PAR LIANT

(30) Priorität: 25.04.2002 DE 10218642
(43) Veröffentlichungstag der Anmeldung: 02.03.2005
(73) Patentinhaber: TMD Friction Services GmbH, 51381 Leverkusen (DE)
(72) Erfinder: HOGENKAMP, Wolfgang, 42885 Remscheid (DE); REINEKE, Ulrich, 51491 Overath (DE); WAHLE, Paul, 51147 Köln (DE); WENSCH, Helmuth, 51467 Bergisch Gladbach (DE)
(74) Vertreter: Müller, Eckhard
(86) Internationale Anmeldenummer: PCT/EP2003/004051
(87) Internationale Veröffentlichungsnummer: WO 2003/090992

(56) Entgegenhaltungen:
- EP-A- 1 098 104
- EP-A- 1 106 336
- FR-A- 2 627 695
- PATENT ABSTRACTS OF JAPAN vol. 1998, no. 04, 31. März 1998 (1998-03-31) & JP 09 309121 A (AKEBONO BRAKE RES &DEV CENTER LTD), 2. Dezember 1997 (1997-12-02)

## Beschreibung

Die Erfindung betrifft ein Verfahren zum Herstellen von Reibbelägen aus bindemittelgebundenem Pressgut, insbesondere von Brems- oder Kupplungsbelägen, nach dem Oberbegriff der Ansprüche 1 und 12.

Die Erfindung betrifft ferner eine Vorrichtung zur Herstellung von Reibbelägen aus bindemittelgebundenem Pressgut, insbesondere von Brems- oder Kupplungsbelägen, nach dem Oberbegriff der Ansprüche 6 und 7.

Bei der Verarbeitung von bindemittelhaltigem Pressgut entstehen bei der Vernetzung der Bindemittel Reaktionsgase. Da das in der Regel als Schüttmasse vorliegende Pressgut verdichtet wird, muss die mitverdichtete und in der Pressform erhitzte Luft aus dem Reibbelag entfernt werden. Bei der üblicherweise unter Druck und Temperatur ablaufenden Verpressung des Pressguts könne durch andere Komponenten noch Wasserdampf oder weitere Reaktionsgase, z.B. Ammoniak entstehen. Auch diese Gase müssen aus dem Reibbelag entfernt werden. Dies geschieht bisher in der Regel zwischen den einzelnen Pressvorgängen, da ein Ableiten der Gase für den Ablauf von Bindemittelreaktionen und zur Herstellung eines homogenen Reibbelags notwendig ist. Bisher wird dabei so verfahren, dass man das Presswerkzeug, d. h. den Pressstempel entgegen der Pressbewegung öffnet und nach der Entgasung des Reibbelags wieder schließt. Bei erneuter Druck- und Hitzebeaufschlagung können weitere Gase entstehen, die ebenfalls abgeführt werden müssen. Der Entgasungshub des Pressstempels wird wiederholt. Dies ist zeitaufwendig. Lange Gesamtpresszeiten sind die Folge. Außerdem können die Reaktionen im Pressgut bei dessen Verpressung zum Reibbelag nur in Intervallen ablaufen. Dies führt unter Umständen zu einer unvollkommenen Aushärtung des Reibbelags und zu Inhomogenitäten im Reibbelag.

Die bekannte Art der Entgasung hat einen weiteren Nachteil. Durch die heiße glatte Oberfläche des Pressstempels wird die Oberfläche des Reibbelags oftmals "glasartig" glatt und damit schlecht durchlässig für eine Gasdiffusion. Die Gase müssen jedoch entgegen der Pressrichtung - also über die glatte Oberfläche - aus dem Reibbelag herausdiffundieren. Dies ist wie gesagt nicht ohne weiteres möglich. Aufgrund der geringen Eigenfestigkeit des Reibbelags zum Zeitpunkt des Entgasens kann der innere Gasdruck zu Rissen, Blasen und Delaminationen führen. Ein Reibbelag mit solchen Fehlern ist unbrauchbar.

Zur Vermeidung der geschilderten Nachteile wurde ein Verfahren zur Herstellung von Bremsbelägen entwickelt (DE 199 53 438 A1), bei welchem eine Entgasung des Reibbelags kontinuierlich während des Presshubs erfolgt. Die Entgasung des Reibbelags findet während des Pressvorgangs über im Pressstempel ausgebildete Bohrungen statt. Die Serienfertigung von Bremsbelägen wurde hierdurch insbesondere in Bezug auf die Presszeit gegenüber der Entgasung durch Öffnung des Presswerkzeugs verbessert. Es kann jedoch nach wie vor zu Inhomogenität und damit zum Ausschuss von Reibbelägen kommen.

Die JP 09-309121 A beschreibt eine beheizbare Presseinrichtung mit einer untenliegenden Gegendruckplatte, eine daran angrenzende Seitenwand und mit einem in die von Gegendruckplatte und Seitenwand gebildete Pressform einfahrbaren Pressstempel. Diese Presseinrichtung ist zumindest im Bereich des Pressstempels oder der Seitenwand mit einem porösen Material versehen, um ein Entlüften der Pressform zu ermöglichen. Für einen in die Pressform eintauchenden Kernabschnitt des Pressstempels ist insbesondere ein hitzebeständiges atmungsaktives Material, wie etwa eine poröse Keramik vorgesehen. Dererlei Materialien sind jedoch für die Herstellung von Reibbelägen für Fahrzeugbremsen oder -kupplungen nicht geeignet.

Die EP 1 106 336 A1 offenbart eine Vorrichtung zum Pressen pulverförmiger keramischer Materialien mit einem oberen und einem unteren Element, die gegeneinander gepresst werden, wobei zumindest eine der beiden Oberflächen der Elemente eine Vielzahl von Löchern aufweist, um eine Strömungsverbindung mit der Außenatmosphäre herzustellen. Allerdings ist diese Pressform nicht dazu ausgelegt, dass zu pressende Material zu erwärmen. Sie ist daher für die Herstellung von Brems- oder Kupplungsbelägen bei welchen ein unter Wärmeeinwirkung aufschmelzendes Bindemittel vorgesehen ist, denkbar ungeeignet.

Die JP 07-304090 A wurde als nächstliegender Stand der Technik zur Abgrenzung der unabhängigen Ansprüche herangezogen und offenbart eine Pressform mit einer Gegendruckplatte, einer seitlichen Umfangswandung und einem Pressstempel, wobei zwischen einem radial außen liegenden Rand des Pressstempels und der Innenwandung der Pressform-Seitenwand ein Spalt gebildet ist, welcher eine Größe von 0,2 bis 1,5 mm aufweist. Dieser Entlüftungsspalt soll das Entweichen von während des Pressvorgangs erzeugten Reaktionsgasen aus der Pressform ermöglichen, um die Presszeit zu verkürzen. Dabei ist ferner vorgesehen, die Pressform während eines Pressvorgangs nicht zu öffnen. So wird allenfalls der Pressdruck in Intervallen abgesenkt.

Der Erfindung liegt die Aufgabe zugrunde, die Wärme- und Druckeinwirkung sowie die Abfuhr von vorhandenen oder entstehenden Reaktionsgasen aufeinander so abzustimmen, dass die während des Pressvorgangs entstehenden Gase oder bereits im Pressgut enthaltene Gase unter einem möglichst geringen Diffusionswiderstand aus dem Pressgut herausgeführt werden können.

Zur Lösung dieser Aufgabe sind die Verfahren gemäß den Ansprüchen 1 und 12 vorgesehen.

Die Erfindung vereint mehrere Vorteile. Zum einen könne die Presszeiten minimal gehalten werden. Es bedarf keiner Lüftzyklen - also keines Heraus- und Wiedereinfahrens des Presswerkzeugs in die Form. Vielmehr kann die Entgasung kontinuierlich stattfinden. Durch die Einwirkung des Presswerkzeugs (also durch eine Druck- und Wärmebeaufschlagung) während des gesamten Pressvorgangs kann der Reibbelag homogen aushärten. Insbesondere die bei erhöhter Temperatur stattfindenden Reaktionen im Pressgut laufen vollständig und innerhalb kürzester Zeit ab. Der Härtvorgang wird dadurch begünstigt, dass die Flächen des Belags ständig mit dem beheizten Werkzeug in Kontakt stehen. Eine gesonderte Härtung kann also entfallen. Ein weiterer Vorteil liegt in der hohen Qualität der erzeugten Reibbeläge. Durch die Aufrechterhaltung des Pressdrucks auf zumindest reduziertem Pegel kann der innere Gasdruck - anders als im Stande der Technik - den Belag nicht zerstören. Es kommt zu erheblich weniger Ausschuss. Durch Einstellung der Spannkraft und/oder des Spannwegs kann ferner die Kompreßibilität des Reibbelags gezielt eingestellt werden. Der Reibbelag kann über seinen gesamten radialen Bereich ausgasen. Der Erfindung liegt die Erkenntnis zugrunde, dass in einer Richtung rechtwinklig zur Pressrichtung der Reibbelag durch die beim Pressen erzeugte Struktur im Pressgut für die eingeschlossenen Gase den geringsten Diffusionswiderstand aufweist. Risse, Blase, Delaminationen etc. in den Oberflächenbereichen des Reibbelags werden deutlich verringert. Auch ist es möglich, die gas- oder dampfförmigen Medien während und/oder nach dem Pressvorgang über die dem Presswerkzeug abgewandte Seite des Reibbelags abzuführen. Die dem Presswerkzeug abgewandte Seite des Reibbelags härtet "zuletzt" aus und gestattet eine vollständige Entgasung des Reibbelags. Auch hierdurch wird eine Beschädigung insbesondere der Oberflächenbereiche der dem Presswerkzeug zugewandten Seite des Reibbelags wirkungsvoll vermieden. Weiterhin wird vorgeschlagen, dass zumindest während einer Phase des Pressvorgangs zwischen dem Reibbelag und einer zugehörigen komplementären seitlichen Formwandung der Form ein Spalt erzeugt wird, in welchen die im Pressgut eingeschlossenen gas- oder dampfförmigen Medien ausdiffundieren und anschließend abgeführt werden. Bereits nach einer kurzen Formgebungsphase des Reibbelags kann dessen Seitenwand auch vollständig radial freigelegt werden, wie es vorzugweise vorgeschlagen wird. Der Druck und ggf. die Wärmeeinbringung über die Stirnseite des Reibbelags werden auf zumindest einem reduzierten Niveau aufrechterhalten.

Die Erfindung eignet sich für Reibbeläge aller Art. Insbesondere jedoch ist sie gerichtet auf Brems- oder Kupplungsbeläge. Bremsbeläge für Trommelbremsen können nach der Erfindung ebenso hergestellt werden wie Scheibenbremsbeläge. In einer bevorzugten Ausführungsform der Erfindung wird daher vorgeschlagen, dass vorzugsweise nach dem Einfüllen des Pressguts in die Form letztere mit einer Trägerplatte belegt wird und dass die gas- oder dampfförmigen Medien radial und/oder über in der Trägerplatte ausgebildete Öffnungen aus der Form abgeführt werden. Bei der Verpressung des Pressguts verbindet sich das Reibmaterial mit der Trägerplatte, und zwar entweder durch eine Klebschicht oder durch die Hafteigenschaften des Pressguts.

Vorteilhafterweise wird die Trägerplatte über eine dem Presswerkzeug entgegenwirkende Gegendruckplatte mit Druck beaufschlagt, und die gas- oder dampfförmigen Medien werden zwischen der Trägerplatte und der Gegendruckplatte zur Umgebungsatmosphäre hin abgeführt. Dazu kann ein Kanal in der Gegendruckplatte oder in der Trägerplatte (oder in beiden) vorgesehen sein. Der Kanal schafft eine Verbindung zwischen den Öffnungen in der Trägerplatte und der Umgebungsatmosphäre. Da der bzw. die Kanäle nur eine sehr geringe Oberfläche im Gegensatz zur gesamten Wirkungsfläche einnehmen, sind sie sowohl für den Anlagebereich der Gegendruckplatte als auch für die Trägerplatte völlig unkritisch.

Alternativ oder zusätzlich können die gas- oder dampfförmigen Medien auch durch die Gegendruckplatte hindurch zur Atmosphäre hin abgeführt werden. Bei der Herstellung eines Reibbelags mit Trägerplatte fluchten die Öffnungen in der Gegendruckplatte vorzugsweise mit den in der Trägerplatte ausgebildeten Öffnungen.

Zur Lösung der Aufgabe sind auch die Vorrichtungen gemäß den Ansprüchen 6 und 7 vorgesehen. Die Umfangswandung kann nach einer kurzen Formgebungsphase des Reibbelags "heruntergefahren" werden, wobei dann die Seiten des Reibbelags zur Entgasung freigegeben werden. Es entsteht ein Spalt, in den Gase oder Dämpfe ausdiffundieren. Der Spalt kann so weit vergrößert werden, dass die Seitenflächen des Reibbelags vollständig freiliegen. Selbstverständlich - wenn auch aufwendiger - ist es möglich, die Umfangswandung stationär zu halten und den Pressstempel zusammen mit der Gegendruckplatte relativ zur Umfangswandung zu bewegen.

Alternativ ist eine Vorrichtung vorgesehen, bei der der Gegendruckplatte zugewandten Seite des Reibbelags mindestens eine Öffnung zugeordnet ist, die eine Verbindung von zumindest einem Teilbereich der Reibbelagoberfläche mit der Umgebungsatmosphäre schafft. Dabei sind in der dem Reibbelag zugewandten Seite der Gegendruckplatte kanalartige Vertiefungen ausgebildet, die zumindest einen Teilbereich des Reibbelags seitlich mit der Umgebungsatmosphäre verbinden. Die kanalartigen Vertiefungen können beispielsweise als Nuten ausgebildet sein, über die der Reibbelag entgast. Zur Herstellung eines Scheibenbremsbelags wird vorgeschlagen, dass zwischen der Gegendruckplatte und dem Pressgut eine Trägerplatte angeordnet ist, die sich auf einer Seite gegen die Gegendruckplatte abstützt und die von der anderen Seite mit dem Pressgut beaufschlagt wird, wobei die Trägerplatte und das Pressgut den Reibbelag bilden. Der Reibbelag kann in der beschriebenen Weise radial entgast werden. Die Trägerplatte weist zur alternativen oder zusätzlichen Entgasung mindest eine Trägerplattenöffnung auf, durch die die gas- oder dampfförmigen Medien abgeführt werden. Die Trägerplattenöffnungen haben zweckmäßig eine sich nach außen trichterförmig erweiternde Form, die sich durch einen einfachen Stanzvorgang herstellen lässt. Die Gegendruckplatte kann mit Vorsprüngen versehen sein, die vorzugsweise teilweise in die Trägerplattenöffnungen eingreifen, wobei ein Restspalt verbleibt, durch den die Gase austreten können.

Auch kann die Gegendruckplatte mindestens eine Durchgangsöffnung aufweisen, die zumindest ein Teilbereich des Reibbelags mit der Umgebungsatmosphäre verbindet. Die Gase werden also durch die Gegendruckplatte hindurch zur Umgebungsatmosphäre geleitet. Die Durchgangsöffnungen fluchten vorteilhafterweise mit den Trägerplattenöffnungen.

In die Durchgangsöffnung in der Gegendruckplatte kann ein Einsatz - ein sogenannter Stopfenstempel - eingesetzt werden. Zwischen dem Stopfenstempel und der Durchgangsöffnung verbleibt ein Ringspalt. Die Gegendruckplatte ist auf ihrer dem Reibbelag abgewandten Seite mit einer Nut versehen, die die Gase vom Ringspalt nach außen führt. Der Ringspalt wird so eingestellt, daß kein Preßgut bzw. Reibmaterial in den Spalt zwischen dem Stopfenstempel und der Gegendruckplatte austreten kann.

Der Bereich, an dem die Gase austreten, kann sich abnutzen. Der Stopfenstempel wird daher, wenn er Verschleißerscheinungen aufweist, einfach herausgenommen und durch einen neuen Stopfenstempel ersetzt.

Die Erfindung wird in der folgenden Beschreibung anhand eines bevorzugten Ausführungsbeispiels in Verbindung mit der beiliegenden Zeichnung näher erläutert. Die Zeichnung zeigt in:
Fig. 1 und 2 eine schematische Schnittansicht durch ein erstes Ausführungsbeispiel einer erfindungsgemäßen Vorrichtung in der vollständig geschlossenen Press-Endstellung und einer anschließenden Entgasungsstellung, in welcher die im Reibbelag eingeschlossenen Gase radial ausdiffundieren können;
Fig. 3 ein zweites Ausführungsbeispiel einer erfindungsgemäßen Pressvorrichtung, bei welcher die Gase und/oder Dämpfe über die Gegendruckplatte abgeführt werden;
Fig. 4 ein drittes, gegenüber dem Ausführungsbeispiel gemäß Figur 3 abgewandeltes Ausführungsbeispiel, bei welchem die Abfuhr der Gase bzw. Dämpfe aus dem Reibbelag über Kanäle in der Rückseite der Trägerplatte erfolgt;
Fig. 5 eine schematische perspektivische Schnittansicht durch ein viertes Ausführungsbeispiel, bei dem die Abfuhr der Gase bzw. Dämpfe durch die Gegendruckplatte hindurch erfolgt; und
Fig. 6 eine Seitenansicht eines Stopfenstempels, wie er in Figur 5 in die Gegendruckplatte eingesetzt ist, jedoch in vergrößertem Maßstab.

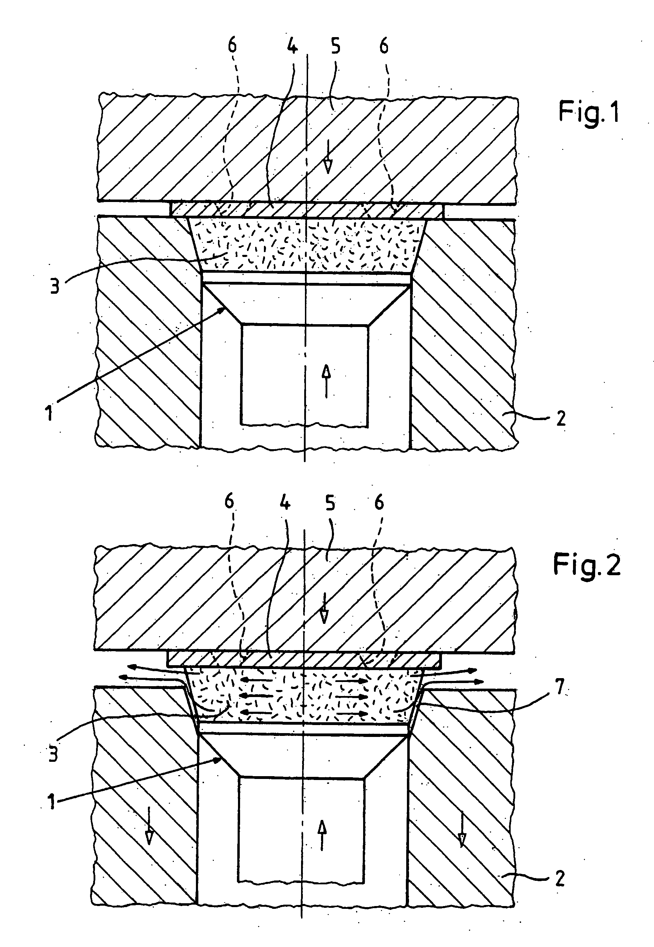

In Figur 1 ist eine Preßvorrichtung zur Herstellung von Bremsbelägen für Scheibenbremsen von Kraftfahrzeugen gezeigt. Die Preßvorrichtung weist einen Preßstempel 1 auf, der relativ zu einer Umfangswandung 2 bewegbar ist. Die Umfangswandung 2 ist stationär gehalten. Sie bildet zusammen mit dem Stempel 1 eine Aufnahme bzw. Form für im Ausgangszustand als Schüttung vorliegendes Preßgut 3, das nach Verdichtung durch den Preßstempel den Reibbelag bildet.

Auf Umfangswandung 2 liegt eine Trägerplatte 4 aus Metall auf. Bei der Verpressung des Preßguts 3 wird das Preßgut festhaftend auf die Trägerplatte 4 aufgebracht. Der Gegendruck des Stempels 1 bei der Verpressung wird über eine Gegendruckplatte 5 aufgebracht.

Im einzelnen wird ein Bremsbelag wie folgt hergestellt: zunächst befindet sich der Stempel 1 in einer abgesenkten Position. Die von dem Preßstempel 1 und der Umfangswandung 2 gebildete Form ist oben offen. Es wird eine definierte Menge von Preßgut 3 in die Form eingefüllt. Anschließend wird die Trägerplatte 4 auf der Umfangswandung 2 plaziert und von der Gegendruckplatte 5 vorgespannt. Der Preßstempel 1 preßt nun das Preßgut 3 zusammen und gegen die Trägerplatte 4. Dabei kann das Preßgut bereits auf beispielsweise 1/5 seines Volumens zusammengepreßt werden.

In der Trägerplatte 4 sind Öffnungen 6 ausgebildet, in die das Preßgut bei der Verpressung zumindest geringfügig eintreten kann und damit zusätzlich eine mechanische Verankerung schafft. Die Öffnungen 6 sind in aller Regel gestanzt und daher leicht konisch ausgebildet. Die Öffnungen 6 sind nicht obligatorisch. Sie bilden zwar eine formschlüssige Verbindung des Reibbelags mit der Trägerplatte 4 (und insbesondere einen hohen Widerstand gegen Scherkräfte), jedoch reicht der Formschluß zwischen dem Reibbelag und der Trägerplatte für eine zuverlässige Verbindung durchaus aus.

Der Preßstempel 1 wird bei dem Preßvorgang erhitzt. Während des Preßvorgangs wird das Preßgut 3 also unter Zufuhr zusätzlicher Wärmeenergie in Form gepreßt und gehärtet. Dabei entstehen Gase bzw. Dämpfe, die aus der Form abgeführt werden müssen, damit es nicht zu einer Schädigung der Reibbelags und damit zu dessen Ausschuß kommt.

Figur 2 zeigt, wie zur Entgasung erfindungsgemäß die Umfangswandlung 2 in Abwärtsrichtung geöffnet wird. Dies kann bereits nach einer kurzen Formgebungsphase des Reibbelags erfolgen, in der der Reibbelag genügend Stabilität erhält, auch ohne die Umfangswandung 2 seine Form zu bewahren. Beim Herunterfahren der Umfangswandung 2 bildet sich ein Spalt 7. Die gas- bzw. dampfartigen Medien können in den Spalt 7 ausdiffundieren und werden aus der Form herausgeführt. In Figur 2 ist die Form nur teilweise geöffnet dargestellt. Selbstverständlich und vorzugsweise kann auch die gesamte Seitenwand des Reibbelags freigelegt werden, und zwar entweder durch Absenken der Umfangswandung, wie es dargestellt ist, oder durch gleichzeitiges Hochfahren des Preßstempels 1 zusammen mit der Gegendruckplatte 5 und dem dazwischen gehaltenen Bremsbelag.

Während der gesamten Entlüftung wird der Druck des Preßstempels 1 zumindest auf reduziertem Niveau aufrechterhalten. Auch die Wärmeeinbringung kann kontinuierlich erfolgen. Das Resultat ist ein homogener Bremsbelag von ausgezeichneter Qualität, der in kürzester Zeit hergestellt werden kann.

Sollte das Preßgut 3 aus irgendwelchen Gründen noch nicht vollständig verfestigt - also formstabil - sein, dann kann die Umfangswandung 2 nach ihrem Herunterfahren auch wieder unter Schließung der Form hochgefahren werden, um die radiale Form des Belages zu stabilisieren.

Wenn der Reibbelag vollständig verfestigt und die unerwünschten gasförmigen Bestandteile ausdiffundiert sind, kann der fertige Bremsbelag aus der Form entnommen werden.

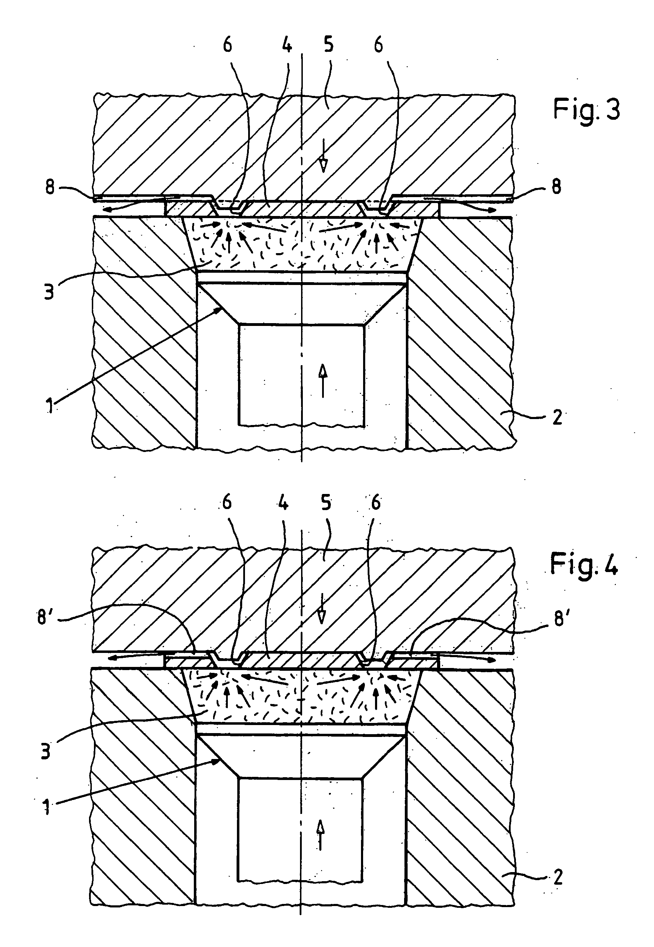

Das in Figur 3 gezeigte Ausführungsbeispiel der Vorrichtung entspricht dem grundsätzlichen Aufbau der in den Figuren 1 und 2 gezeigten Pressform, so daß nachstehend zur Vermeidung unnötiger Wiederholungen nur die getroffenen Abwandlungen beschrieben werden, während im Übrigen auf die vorausgehende Beschreibung der Figuren 1 und 2 verwiesen werden kann. Den funktionellen übereinstimmenden Bauteilen in den Zeichnungsfiguren sind gleiche Bezugszeichen zugeordnet.

Beim Ausführungsbeispiel gemäß Figur 3 soll die Entgasung des entstehenden Reibbelags kontinuierlich während des Pressvorgangs über die Durchgangsöffnungen 6 in der Trägerplatte 4 erfolgen. Um dies zu erreichen, sind in die an der Trägerplatte 4 anliegende Druckfläche der Gegendruckplatte 5 kanalartige Vertiefungen 8 eingearbeitet. Letztere sind von dem nahe den Durchgangsöffnungen 6 liegenden Bereich der Gegendruckplatte 5 bis zur Außenatmosphäre geführt.

Die Gegendruckplatte 5 weist in ihrem den Durchgangsöffnungen 6 der Trägerplatte gegenüberliegenden Bereichen jeweils einen kegelstumpfförmigen Vorsprung auf, der beim Pressvorgang in die Durchgangsöffnung 6 eingreift. Die Vorsprünge haben einen geringeren Querschnitt als die Durchgangsöffnungen 6, so daß sie die Durchgangsöffnungen 6 nicht ganz verschließen. Dadurch können die Gase und Dämpfe ausdiffundieren. Es sei darauf hingewiesen, daß ein Vorsprung nicht unbedingt notwendig ist. Gleichermaßen bevorzugt ist eine im wesentlichen plan Fläche über den Durchgangsöffnungen 6.

Figur 4 zeigt ein Ausführungsbeispiel, bei welchem kanalartigen Vertiefungen 8' in die der Gegendruckplatte 5 zugewandte Flachseite der Trägerplatte 4 verlegt sind. Im Übrigen entspricht dieses Ausführungsbeispiel dem vorstehend beschriebenen Ausführungsbeispiel vollständig, d.h. die Abfuhr der gas- bzw. dampfförmigen Einschlüsse in der Pressmasse erfolgt kontinuierlich während des Pressvorgangs über die Durchgangsöffnungen 6 und die kanalartigen Vertiefungen 8', die von den Durchgangsöffnungen 6 zum Rand der jeweiligen Trägerplatte 4 verlaufen.

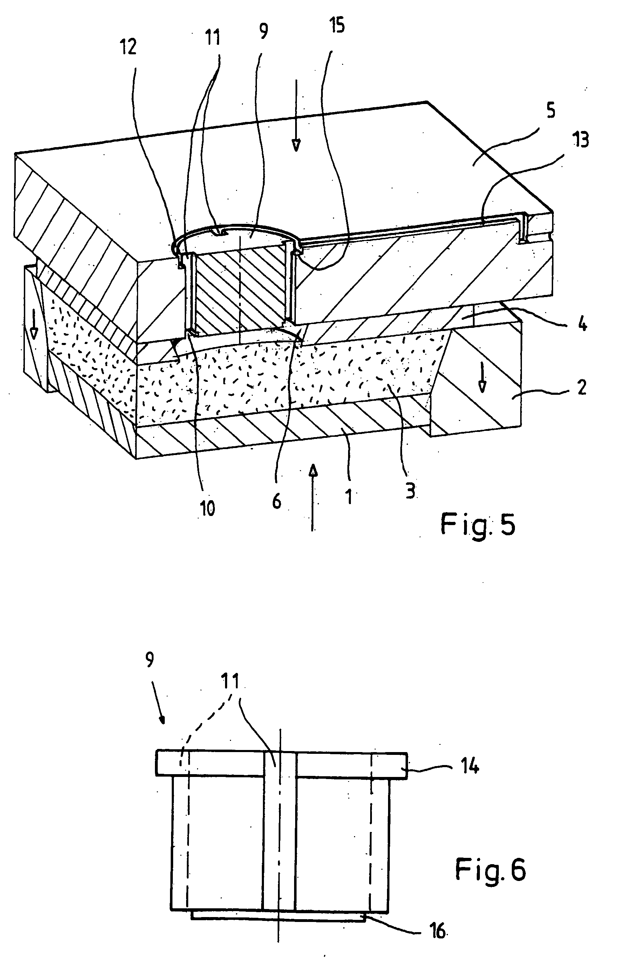

Figur 5 veranschaulicht eine weitere Möglichkeit der Ableitung von gas- bzw. dampfförmigen Medien. Die Preßform ist geschlossen dargestellt.

In die Druckplatte 5 ist ein Stopfenstempel 9 eingesetzt, der im wesentlichen mit der Durchgangsöffnung 6 in der Trägerplatte 4 fluchtet. Der Stopfenstempel 9 bildet zusammen mit der Gegendruckplatte 5 an ihrer Unterseite eine im wesentlichen plan Ebene, wobei zwischen dem Stopfenstempel und der Gegendruckplatte ein erster Ringraum 10 verbleibt. In diesen können ausdiffundierende Medien eintreten, wobei sie durch in dem Stopfelstempel 9 ausgebildete Längsnuten 11 in einen zweiten Ringraum 12 und von dort in einen seitlichen Abführkanal 13 zur Umgebungsatmosphäre hin abgeleitet werden.

Der zweite Ringraum 12 ist insbesondere dann notwendig, wenn auf die Gegendruckplatte 5 ein Bauteil der Preßvorrichtung einwirkt, das plan auf der Gegendruckplatte im Bereich des Stopfenstempels 9 aufliegt. Durch den Ringraum 12 und den Kanal 13 werden die Gase "unterhalb" der Oberseite der Gegendruckplatte 5 abgeleitet.

Der Stopfenstempel 9 unterliegt einem gewissen Verschleiß. Außerdem kann er dazu verwendet werden, durch an seiner Unterseite ausgebildete Einprägungen den Bremsbelag durch Prägung von in die Trägerplattenöffnung 6 eintretendem Reibmaterial zu kennzeichnen. Eine derartige Kennzeichnung kann z.B. die Beschaffenheit des Reibmaterials beinhalten oder sie erfüllt sonstige abnehmerspezifische Forderungen.

In Figur 6 ist der Stopfenstempel 9 in vergrößertem Maßstab in Alleinstellung dargestellt. Der dargestellte Stopfenstempel 9 weist vier Nuten 11 auf. Selbstverständlich ist bereits eine Nut 11 ausreichend, wobei beachtet werden sollte, daß Preßgut 3 in den ersten Ringraum 10 zwischen dem Stopfenstempel 9 und der Gegendruckplatte 5 eintreten kann und ggf. die lediglich eine Nut 11 verschließt. Es sind daher mehrere Nuten 11 zur sichereren und gleichmäßigeren Ableitung der Gase empfehlenswert. An seiner Oberseite weist der Stopfelstempel 9 einen umlaufenden Absatz 14 auf, mit dem er auf einer Schulter 15 der Gegendruckplatte 5 (Figur 5) aufliegt. An seiner Unterseite trägt der Stopfenstempel 9 einen Vorsprung 16, in dem beispielsweise eine Prägung zur Typisierung des Bremsbelags eingebracht sein kann.

Im Rahmen der Erfindung sind durchaus Abwandlungen möglich. So kann ein radiales Lüften des Bremsbelags nicht nur durch Absenken der Umfangswandung 2, sondern - wie bereits erwähnt - auch durch ein "Herausfahren" des zwischen dem Preßstempel 1 und der Gegendruckplatte 5 eingespannten Belags erfolgen. Auch ist die Preßvorrichtung nicht auf die in den Figuren dargestellte Orientierung festgelegt. Auch eine Einfüllung des Preßguts 3 von oben auf eine bereits an der Umfangswandung 2 anliegende Gegendruckplatte 5 bzw. Trägerplatte 4 ist denkbar. Schließlich sei noch einmal ausdrücklich darauf hingewiesen, daß die Erfindung zwar in Verbindung mit einem Bremsbelag mit einer Trägerplatte 4 beschrieben worden ist, die Trägerplatte 4 aber nicht notwendigerweise Bestandteil des Bremsbelags sein muß. Dementsprechend kann die Erfindung auch Anwendung auf beispielsweise die Herstellung von Trommelbremsbelägen (die keine Trägerplatte aufweisen) finden.

## Patentansprüche

1. Verfahren zur Herstellung von Reibbelägen aus bindemittelgebundenem Pressgut, wobei
- das Pressgut (3) in eine Form gefüllt wird,
- das Pressgut (3) mit wenigstens einem stempelartigen Presswerkzeug (1) gepresst wird, und
- in der Form enthaltene oder während des Pressvorgangs entstehende gas- oder dampfförmige Medien aus der Form abgeführt werden, wobei der vom Presswerkzeug (1) auf das Pressgut (3) ausgeübte Pressdruck zumindest auf reduziertem Pegel aufrechterhalten wird, und
- die abzuführenden gas- oder dampfförmigen Medien während des Pressvorgangs über einen während des Pressvorgangs zwischen dem Reibbelag und einer zugehörigen seitlichen komplementären Formwandung (2) zumindest zeitweise erzeugten seitlichen Spalt (7) ausdiffundieren und anschließend abgeführt werden, **dadurch gekennzeichnet, dass** der Spalt (7) durch Verschiebung einer zur seitlichen Formgebung des Reibbelags vorgesehenen Umfangswandung (2) relativ zum Presswerkzeug (1) und zur Gegendruckplatte (5) oder umgekehrt erzeugt wird.

2. Verfahren nach Anspruch 1, **dadurch gekennzeichnet, dass** die abzuführenden gas- oder dampfförmigen Medien während des Pressvorgangs zusätzlich über die dem Presswerkzeug (1) abgewandte Seite des Reibbelags (3) abgeführt werden.

3. Verfahren nach Anspruch 2, **dadurch gekennzeichnet,**
- **dass** nach dem Einfüllen des Pressguts in die Form letztere mit einer Trägerplatte (4) belegt wird, und
- **dass** die gas- oder dampfförmigen Medien radial und/oder über in der Trägerplatte (4) ausgebildete Öffnungen (6) aus der Form abgeführt werden.

4. Verfahren nach Anspruch 3, **dadurch gekennzeichnet,**
- **dass** die Trägerplatte (4) über eine dem Presswerkzeug (1) entgegenwirkende Gegendruckplatte (5) mit Druck beaufschlagt wird, und
- **dass** die gas- oder dampfförmigen Medien zwischen der Trägerplatte (4) und der Gegendruckplatte (5) zur Umgebungsatmosphäre abgeführt werden.

5. Verfahren nach Anspruch 3, **dadurch gekennzeichnet,**
- **dass** die Trägerplatte (4) über eine dem Presswerkzeug (1) entgegenwirkende Gegendruckplatte (5) mit Druck beaufschlagt wird, und
- **dass** die gas- oder dampfförmigen Medien durch die Gegendruckplatte (5) hindurch zur Umgebungsatmosphäre abgeführt werden.

6. Vorrichtung zur Herstellung von Reibbelägen aus bindemittelgebundenem Pressgut (3), insbesondere von Brems- oder Kupplungsbelägen, mit
- einer Form zur Aufnahme des Pressgutes (3), einem stempelartigen Presswerkzeug (1), das in die Form ein- und aus dieser ausfahrbar ist und das Pressgut (3) verpresst und
- einer Gegendruckplatte (5) als Widerlager für die vom Presswerkzeug (1) ausgeübte Presskraft, **dadurch gekennzeichnet,**
- **dass** eine radiale Umfangswandung (2) zur seitlichen Formgebung des Reibbelags vorgesehen ist, die während des Pressvorgangs unter Erzeugung eines seitlichen Spalts (7) relativ zum Pressstempel (1) und zur Gegendruckplatte (5) verschiebbar ist oder umgekehrt.

7. Vorrichtung zur Herstellung von Reibbelägenaus bindemittelgebundenem Pressgut (3), insbesondere von Brems- oder Kupplungsbelägen, mit
- einer Form zur Aufnahme des Pressguts (3),- einem stempelartigen Presswerkzeug (1), das in die Form ein- und aus dieser ausfahrbar ist und das Pressgut (3) verpresst, und einer Gegendruckplatte (5) als Widerlager für die vom Presswerkzeug (1) ausgeübte Presskraft, wobei dass das Presswerkzeug (1) beheizbar ist, und
- wobei der dem beheizbaren Presswerkzeug (1) abgewandten Seite des Reibbelags mindestens eine Öffnung (6) zugeordnet ist, die eine Verbindung von zumindest einem Teilbereich der Reibbelagoberfläche mit der Umgebungsatmosphäre schafft, **dadurch gekennzeichnet, dass** in der dem Reibbelag zugewandten Seite der Gegendruckplatte (5) kanalartige Vertiefungen (8) ausgebildet sind, die zumindest einen Teilbereich des Reibbelags seitlich mit der Umgebungsatmosphäre verbinden.

8. Vorrichtung nach Anspruch 6, **dadurch gekennzeichnet, dass** bei der Verpressung zwischen der Gegendruckplatte (5) und dem Pressgut (3) eine Trägerplatte (4) angeordnet ist, die sich auf einer Seite gegen die Gegendruckplatte (5) abstützt und auf der anderen Seite mit dem Pressgut (3) beaufschlagt wird, wobei sich die Trägerplatte (4) und das Pressgut (3) unter Bildung des Reibbelags verbinden.

9. Vorrichtung nach Anspruch 8, **dadurch gekennzeichnet, dass** in der Trägerplatte (4) zwischen der Gegendruckplatte (5) und dem Pressgut (3) mindestens eine Trägerplattenöffnung (6) zur Abführung der gas- oder dampfförmigen Medien ausgebildet ist.

10. Vorrichtung nach Anspruch 6, **dadurch gekennzeichnet, dass** die Gegendruckplatte (5) mindestens eine Durchgangsöffnung aufweist, die zumindest einen Teilbereich des Reibbelags mit der Umgebungsatmosphäre verbindet.

11. Vorrichtung nach Anspruch 10, **dadurch gekennzeichnet, dass** die Durchgangsöffnung zwischen einem in der Gegendruckplatte aufgenommenen und herausnehmbaren Einsatz (9) und der Gegendruckplatte (5) gebildet ist.

12. Verfahren zur Herstellung von Reibbelägen aus bindemittelgebundenem Pressgut (3), wobei
- das Pressgut (3) in eine Form gefüllt wird,
- das Pressgut (3) mit wenigstens einem stempelartigen Presswerkzeug (1) gepresst wird, und
- in der Form enthaltene oder während des Pressvorgangs entstehende gas- oder dampfförmige Medien aus der Form abgeführt werden, wobei der vom Presswerkzeug (1) auf das Pressgut (3) ausgeübte Pressdruck zumindest auf reduziertem Pegel aufrechterhalten wird, und
- dass die abzuführenden gas- oder dampfförmigen Medien während des Pressvorgangs über die dem beim Pressvorgang beheizten Presswerkzeug (1) abgewandt Seite des Reibbelags abgeführt werden, wobei
- nach dem Einfüllen des Pressguts (3) in die Form letztere mit einer Trägerplatte (4) belegt wird, und
- dass die gas- oder dampfförmigen Medien über in der Trägerplatte (4) ausgebildete Öffnungen (6) aus der Form abgeführt werden, **dadurch gekennzeichnet,**
- **dass** die Trägerplatte (4) über eine dem Presswerkzeug (1) entgegenwirkende Gegendruckplatte (5) mit Druck beaufschlagt wird, und
- **dass** die gas- oder dampfförmigen Medien durch kanalartige Vertiefungen (8) der Gegendruckplatte (5) hindurch zur Umgebungsatmosphäre abgeführt werden.

13. Verfahren nach Anspruch 12, **dadurch gekennzeichnet;**
- **dass** die Trägerplatte (4) über eine dem Presswerkzeug (1) entgegenwirkende Gegendruckplatte (5) mit Druck beaufschlagt wird, und
- **dass** die gas- oder dampfförmigen Medien zwischen der Trägerplatte (4) und der Gegendruckplatte (5) zur Umgebungsatmosphäre abgeführt werden.

## Claims

1. Method of producing friction linings from mouldable material bound by binder, wherein
- the mouldable material (3) is filled into a mould,
- the mouldable material (3) is pressed by at least one die-like press-moulding tool (1) and
- gaseous or vaporous media contained in the mould or arising during the press-moulding process are expelled from the mould, wherein the pressing pressure exerted by the press-moulding tool (1) on the mouldable material (3) is maintained at least at a reduced level and
- the gaseous or vaporous media to be expelled are diffused out and subsequently expelled during the press-moulding process by way of a lateral gap (7) produced at least periodically between the friction lining and an associated complementary side mould wall (2), **characterised in that** the gap (7) is produced by displacement of a circumferential wall (2), which is provided for the lateral shaping of the friction lining, relative to the press-moulding tool (1) and to the counter-pressure plate (5) or conversely.

2. Method according to claim 1, **characterised in that** the gaseous or vaporous media to be expelled are additionally expelled during the press-moulding process by way of the side of the friction lining (3) remote from the press-moulding tool (1).

3. Method according to claim 2, **characterised in that**
- after filling of the mouldable material into the mould the latter is covered by a carrier plate (4) and
- the gaseous or vaporous media are expelled from the mould radially and/or by way of openings (6) formed in the carrier plate (4).

4. Method according to claim 3, **characterised in that**
- the carrier plate (4) is loaded with pressure by way of a counter-pressure plate (5) opposing to the press-moulding tool (1) and
- the gaseous or vaporous media are expelled between the carrier plate (4) and the counter-pressure plate (5) to the ambient atmosphere.

5. Method according to claim 3, **characterised in that**
- the carrier plate (4) is loaded with pressure by way of a counter-pressure plate (5) acting oppositely to the press-moulding tool (1) and
- the gaseous or vaporous media are expelled through the counter-pressure plate (5) towards the ambient atmosphere.

6. Device for producing friction linings from mouldable material (3) bound by a binder, particularly brake linings or clutch linings, comprising
- a mould for receiving the mouldable material (3),
- a die-like press-moulding tool (1) which is movable into and out of the mould and presses the mouldable material (3) and
- a counter-pressure plate (5) as counter-bearing for the pressing force exerted by the press-moulding tool (1),
**characterised in that**
- a radial circumferential wall (2) for lateral shaping of the friction lining is provided, which wall during the press-moulding process is displaceable relative to the press-moulding die (1) and to the counter-pressure plate (5) or conversely with creation of a lateral gap (7).

7. Device for producing friction linings from mouldable material (3) bound by a binder, particularly brake linings or clutch linings, comprising
- a mould for receiving the mouldable material (3),
- a die-like press-moulding tool (1) which is movable into and out of the mould and presses the mouldable material (3) and
- a counter-pressure plate (5) as counter-bearing for the pressing force exerted by the press-moulding tool (1), wherein the press-moulding tool (1) is heatable and wherein at least one opening (6) is associated with the side of the friction lining remote from the heatable press-moulding tool (1) and produces a connection of at least a sub-region of the friction lining surface with the ambient atmosphere,
**characterised in that** channel-like depressions (8) are formed in the side of the counter-pressure plate (5) facing the friction lining and connect at least a sub-region of the friction lining laterally with the ambient atmosphere.

8. Device according to claim 6, **characterised in that** for the pressing a carrier plate (4) is arranged between the counter-pressure plate (5) and the mouldable material (3), which plate is supported on one side against the counter-pressure plate (5) and loaded on the other side by the mouldable material (3), wherein the carrier plate (4) and the mouldable material (3) connect under formation of the friction lining.

9. Device according to claim 8, **characterised in that** at least one carrier plate opening (6) for expulsion the gaseous or vaporous media is formed in the carrier plate (4) between the counter-pressure plate (5) and the mouldable material (3).

10. Device according to claim 6, **characterised in that** the counter-pressure plate (5) has at least one passage opening which connects at least a sub-region of the friction lining with the ambient atmosphere.

11. Device according to claim 10, **characterised in that** the passage opening is formed between an insert (9), which is received in the counter-pressure plate and withdrawable, and the counter-pressure plate (5).

12. Method of producing friction linings from mouldable material bound by binder, wherein
- the mouldable material (3) is filled into a mould,
- the mouldable material (3) is pressed by at least one die-like press-moulding tool (1) and
- gaseous or vaporous media contained in the mould or arising during the press-moulding process are expelled from the mould, wherein the pressing pressure exerted by the press-moulding tool (1) on the mouldable material (3) is maintained at least at a reduced level and
- the gaseous or vaporous media to be expelled are expelled during the press-moulding process by way of the side of the friction lining remote from the press-moulding tool (1), which is heated during the press-moulding process, wherein
- after filling of the mouldable material (3) into the mould the latter is covered by a carrier plate (4), and
- the gaseous or vaporous media are expelled from the mould by way of openings (6) formed in the carrier plate (4),
**characterised in that**
- the carrier plate (4) is loaded with pressure by way of a counter-pressure plate (5) opposing to the press-moulding tool (1) and
- the gaseous or vaporous media are expelled through channel-like depression (8) of the counter-pressure plate (5) to the ambient atmosphere.

13. Method according to claim 12, **characterised in that**
- the carrier plate (4) is loaded with pressure by way of a counter-pressure plate (5) opposing the press-moulding tool (1) and
- the gaseous or vaporous media are expelled between the carrier plate (4) and the counter-pressure plate (5) to the ambient atmosphere.

## Revendications

1. Procédé pour fabriquer des garnitures de friction à partir de matières à presser liées par liant, dans lequel
- on verse les matières à presser (3) dans un moule,
- on presse les matières à presser (3) avec au moins un outil de pressage (1) en forme de poinçon,
- on évacue hors du moule des fluides sous forme de gaz ou de vapeur présents dans le moule ou formés pendant l'opération de pressage, dans lequel on maintient au moins à un niveau réduit la pression de pressage exercée sur les matières à presser (3) par l'outil de pressage (1), et
- on fait diffuser et ensuite on évacue les fluides sous forme de gaz ou de vapeur à évacuer pendant l'opération de pressage par une fente latérale (7), produite au moins temporairement, entre la garniture de friction et une paroi de moulage complémentaire latérale correspondante (2),
**caractérisé en ce que** l'on produit la fente (7) par déplacement d'une paroi de moulage (2) prévue pour le formage latéral de la garniture de friction par rapport à l'outil de pressage (1) et à la plaque de contre-pression (5) ou inversement.

2. Procédé selon la revendication 1, **caractérisé en ce que** l'on évacue les fluides sous forme de gaz ou de vapeur à évacuer pendant l'opération de pressage en plus par la face de la garniture de friction (3) située à l'opposé de l'outil de pressage (1).

3. Procédé selon la revendication 2, **caractérisé en ce que**
- on garnit le moule d'une plaque de support (4) après le déversement des matières à presser dans le moule, et
- on évacue les fluides sous forme de gaz ou de vapeur hors du moule radialement et/ou par des ouvertures (6) pratiquées dans la plaque de support (4).

4. Procédé selon la revendication 3, **caractérisé en ce que**
- on soumet la plaque de support (4) à la pression au moyen d'une plaque de contre-pression (5) s'opposant à l'outil de pressage (1), et
- on évacue les fluides sous forme de gaz ou de vapeur vers l'atmosphère ambiante entre la plaque de support (4) et la plaque de contre-pression (5).

5. Procédé selon la revendication 3, **caractérisé en ce que**
- l'on soumet la plaque de support (4) à la pression au moyen d'une plaque de contre-pression (5) s'opposant à l'outil de pressage (1), et
- on évacue les fluides sous forme de gaz ou de vapeur vers l'atmosphère ambiante à travers la plaque de contre-pression (5).

6. Dispositif pour la fabrication de garnitures de friction à partir de matières à presser liées par liant (3), en particulier des garnitures de frein ou d'embrayage, avec
- un moule destiné à recevoir les matières à presser (3),
- un outil de pressage en forme de poinçon (1), qui peut pénétrer dans le moule et sortir de celui-ci et presse les matières à presser (3), et
- une plaque de contre-pression (5) servant d'appui pour la force de pressage exercée par l'outil de pressage (1),
**caractérisé en ce que**
- il est prévu une paroi périphérique radiale (2) pour le formage latéral de la garniture de friction, qui peut être déplacée par rapport au poinçon de pressage (1) et à la plaque de contre-pression (5), ou inversement, pendant l'opération de pressage pour produire une fente latérale (7).

7. Dispositif pour la fabrication de garnitures de friction à partir de matières à presser liées par liant (3), en particulier de garnitures de frein ou d'embrayage, avec
- un moule destiné à recevoir les matières à presser (3),
- un outil de pressage en forme de poinçon (1), qui peut pénétrer dans le moule et sortir de celui-ci et presse les matières à presser (3), et
- une plaque de contre-pression (5) servant d'appui pour la force de pressage exercée par l'outil de pressage (1), dans lequel l'outil de pressage (1) peut être chauffé, et
- dans lequel au moins une ouverture (6) est associée à la face de la garniture de friction située à l'opposé de l'outil de pressage chauffant (1), ouverture qui crée une communication depuis au moins une zone partielle de la surface de la garniture de friction avec l'atmosphère ambiante,
**caractérisé en ce que** des cavités en forme de canal (8) sont formées dans la face de la plaque de contre-pression (5) tournée vers la garniture de friction, lesquelles relient latéralement au moins une zone partielle de la garniture de friction à l'atmosphère ambiante.

8. Dispositif selon la revendication 6, **caractérisé en ce qu'**une plaque de support (4) est disposée entre la plaque de contre-pression (5) et les matières à presser (3) pendant le pressage, laquelle prend appui par une face contre la plaque de contre-pression (5) et est exposée sur l'autre face aux matières à presser (3), dans lequel la plaque de support (4) et les matières à presser (3) s'assemblent en formant la garniture de friction.

9. Dispositif selon la revendication 8, **caractérisé en ce qu'**au moins une ouverture de plaque de support (6) destinée à évacuer les fluides sous forme de gaz ou de vapeur est pratiquée dans la plaque de support (4) entre la plaque de contre-pression (5) et les matières à presser (3).

10. Dispositif selon la revendication 6, **caractérisé en ce que** la plaque de contre-pression (5) présente au moins une ouverture de passage, qui relie au moins une zone partielle de la garniture de friction à l'atmosphère ambiante.

11. Dispositif selon la revendication 10, **caractérisé en ce que** l'ouverture de passage est formée entre un insert (9) amovible logé dans la plaque de contre-pression et la plaque de contre-pression (5).

12. Procédé pour la fabrication de garnitures de friction à partir de matières à presser liées par liant (3), dans lequel
- on verse les matières à presser (3) dans un moule,
- on presse les matières à presser (3) avec au moins un outil de pressage (1) en forme de poinçon,
- on évacue hors du moule des fluides sous forme de gaz ou de vapeur présents dans le moule ou formés pendant l'opération de pressage, dans lequel on maintient au moins à un niveau réduit la pression de pressage exercée sur les matières à presser (3) par l'outil de pressage (1), et
- on évacue les fluides sous forme de gaz ou de vapeur à évacuer pendant l'opération de pressage par la face de la garniture de friction située à l'opposé de l'outil de pressage (1) chauffé pendant l'opération de pressage, dans lequel
- on garnit le moule d'une plaque de support (4) après le déversement des matières à presser (3) dans le moule, et
- on évacue les fluides sous forme de gaz ou de vapeur hors du moule par des ouvertures (6) pratiquées dans la plaque de support (4),
**caractérisé en ce que**
- on soumet la plaque de support (4) à la pression au moyen d'une plaque de contre-pression (5) s'opposant à l'outil de pressage (1), et
- on évacue les fluides sous forme de gaz ou de vapeur vers l'atmosphère ambiante à travers des cavités en forme de canal (8) de la plaque de contre-pression (5).

13. Procédé selon la revendication 12, **caractérisé en ce que**
- on soumet la plaque de support (4) à la pression au moyen d'une plaque de contre-pression (5) s'opposant à l'outil de pressage (1), et
- on évacue les fluides sous forme de gaz ou de vapeur vers l'atmosphère ambiante entre la plaque de support (4) et la plaque de contre-pression (5).
